# EUROPEAN PATENT APPLICATION

(11) **EP 2 192 527 A1**
(43) Date of publication of application: **02.06.2010**
(21) Application number: 09161549.2
(22) Date of filing: 29.05.2009
(51) Int. Cl.: G06K 9/22, G06K 9/20, G06K 9/32, G06F 17/30

(54) **Method for providing camera-based services using a portable communication device of a user and related portable communication device of a user**

(30) Priority: 21.11.2008 EP 08169713
(71) Applicant: beyo GmbH, 14467 Potsdam (DE)
(72) Inventor: Göktekin, Cüneyt, 14471 Potsdam (DE); Tenchio, Oliver, 14469 Potsdam (DE)
(74) Representative: Farago, Peter Andreas

(57) **Abstract**

A method for providing camera-based services using a portable communication device (1) of a user comprises the steps of capturing an image of an environment using a camera of the portable communication device (1) of the user to obtain image data, processing the image data such that text data is recognized and extracted from the image data, and outputting data related to the text data in a form noticeable or convertible to be noticeable by the user of the portable communication device (1), Furthermore a portable communication device (1) comprises a camera adapted to capture an image of an environment, a display (3) adapted to display at least one of a plurality of services to be selectable by a user of the portable communication device (1), and outputting means adapted to output data related to text data in a form noticeable or convertible to be noticeable by the user of the portable communication device (1), the portable communication device (1) being adapted to perform the method for providing camera-based services when the user selects the at least one of the plurality of services.

## Description

### TECHNICAL FIELD

The present invention relates to a method for providing camera-based services using a portable communication device of a user and a related portable communication device of a user, based on text taken with a camera of the portable communication device.

### BACKGROUND ART

Portable communication devices are widely used in daily life by users wishing to perform communication in an easy manner and at every time independent of any fixedly installed communication terminals.

Nowadays, such portable communication devices offer a great number of services including a WAP service and the like. If the user wants to use the WAP service, the user has to input several data related to the WAP service which is troublesome using a numeric keypad of the portable communication device if the portable communication device is for example a mobile phone or a small alphanumeric keypad of the portable communication device if the portable communication device is for example a smartphone.

Additionally, a user might want to use a plurality of services for evaluation of information based on text shown in his environment. Such services as for example getting information about a product might be obtained by providers in the internet. However, it is cumbersome to input the information using the numeric keypad, and also to select a corresponding internet address using the numeric keypad on the mobile phone, for example.

### DISCLOSURE OF INVENTION

It is therefore the object of the present invention to provide a method and a portable communication device which enable a user to input data including text to the portable communication device in a simple manner and to use inputted data in a great number of services which are provided in connection with the portable communication device.

This object is solved by the measures indicated in the independent claims.

Further advantageous modifications of the present invention are subject matter of the dependent claims.

In more detail, there is provided a method for providing camera-based services using a portable communication device of a user, comprising the steps of capturing an image of an environment using a camera of the portable communication device of the user to obtain image data, processing the image data such that text data is recognized and extracted from the image data, and outputting data related to the text data in a form noticeable or convertible to be noticeable by the user of the portable communication device.

Preferably, the text data is further processed to obtain the data related to the text data.

Preferably, at least one of the step of processing and the step of further processing is performed by the portable communication device of the user.

Preferably, at least one of the step of processing and the step of further processing is performed by an external processing unit.

Preferably, the external processing unit comprises at least one server.

Preferably, the text data is transmitted from the portable communication device of the user to the external processing unit, further processed by the external processing unit to form the data related to the text data and the data related to the text data is transmitted from the external processing unit to the portable communication device of the user.

Preferably, the external processing unit comprises a first server communicating with the portable communication device via a first communication network.

Preferably, the external processing unit comprises at least one second server communicating with the first server via a second network.

Preferably, at least one of the step of processing and the step of further processing is performed by the first server.

Preferably, the at least one second server provides a service for processing the image data and/ or further processing the text data.

Preferably, the first server is adapted to receive the image data and/or text data from the portable communication device via the first communication network and to transmit the received image data and/or text data to the at least one second server for processing and/or further processing.

Preferably, a manner of at least one of processing and further processing and/or whether the portable communication device, the first server or the at least one second server performs processing and/or further processing depends on a service selected by the user of the portable communication device of the user using the portable communication device of the user.

Preferably, the first server is adapted to store accounting and/or billing information regarding at least one service provided by at least one second server.

Preferably, the service is selected from a plurality of services displayed on a display of the mobile communication device of the user.

Preferably, the at least one second server includes a database server for storing at least one of the image data, the text data and the data related to the text data for at least one captured image to enable the portable communication device to access the at least one of the image data, the text data and the data related to the test data for at least one captured image in real-time.

Preferably, the at least one second server includes a database server for storing at least one of the image data, the text data and the data related to the text data for at least one captured image, and the first server is communicable connected with a personal computer for accessing the at least one of the image data, the text data and the data related to the text data for at least one captured image, which are stored on the database server, via the first server.

Preferably, the text data and/or text related data is archived by classifying the text data and/or text related data by indexing keywords thereof.

Preferably, at least one of the plurality of services is displayed on the display of the portable communication device of the user using at least one of an icon or text data.

Preferably, the portable communication device of the user is mounted on a support.

Preferably, the support comprises a telescopic pullout.

Preferably, the portable communication device is controlled by a separate control unit.

Preferably, in capturing the image the camera uses actuating means, enabling the user to focus on a desired portion of the environment and to perform automatic release in capturing the image.

Preferably, quality of an image to be captured is indicated by at least one of a manner of actuation of a vibrator of the portable communication device of the user, using a reticule displayed to the user, and an audio feedback provided by the portable communication device.

Preferably, the camera captures a first image of a first portion of the environment to be displayed in a transparent or semi-transparent manner and captures a second image of a second portion of the environment to be displayed in a transparent or semi-transparent manner to thereby enable the user to stitch the first and the second image.

Preferably, a position of the user is determined using at least one position sensor of the portable communication device of the user.

Preferably, the image is at least one of rotated and unwarped before obtaining the image data.

Preferably, block recognition is performed on the image to enable parallel processing in text recognition of obtained blocks and to enhance response time.

Preferably, at least one of the image data, the text data and the data related to the test data for at least one captured image are stored on a server to enable the portable communication device to access the at least one of the image data, the text data and the data related to the test data for at least one captured image in real-time.

Preferably, at least one of the image data, the text data and the data related to the test data for at least one captured image are stored in connection with position data indicating a position where the at least one captured image is captured.

Furthermore, there is provided a portable communication device, comprising a camera adapted to capture an image of an environment, a display adapted to display at least one of a plurality of services to be selectable by a user of the portable communication device, and outputting means adapted to output data related to text data in a form noticeable or convertible to be noticeable by the user of the portable communication device, wherein the portable communication device is adapted to perform the method for providing camera-based services when the user selects the at least one of the plurality of services.

Preferably, the portable communication device further comprises at least one worker module comprising at least one of a worker module for processing the image data such that text data is recognized and extracted from the image data, a worker module for displaying the image to be captured on the display and performing an image analysis for detecting the orientation and/or distortion of text included in the image, a worker module for performing text recognition, and a worker module for converting the text data into speech for speech output; at least one service module; and a control module for controlling the at least one module, wherein the worker modules work independently from each other and each are adapted to communicate with an operation system of the portable communication device via specific interfaces.

Preferably, the portable communication device is adapted to communicate with a server, the at least one worker module is part of a client application and is dynamically configurable through the server without reinstallation of the client application on the portable communication device. Each worker module can also run on the server to achieve load balancing.

Preferably, the at least one service module is adapted to communicate with a server to request for performing a service selected by the user and/or storing user/device specific identification data such as IMSI and/or geo-position data for billing and/or offering location based services.

Moreover, there is provided a server, comprising: a first interface for receiving image data and/or text data from a portable communication device via a first communication network, a second interface for transmitting the received image data and/or text data to another server in a data format readable by the other server, for processing and/or further processing by the other server, said second interface being adapted to receive the processed and/or further processed data from the other server, said first interface being adapted to transmit the processed and/or further processed data received from the other server in a data format readable by the portable communication device as data related to text data to the portable communication device.

Furthermore, all possible technically feasible combinations of the aforementioned features are also part of the present invention, wherein the aforementioned features and all possible technically feasible combinations of the aforementioned features can be also realized in a system for providing camera-based services including a portable communication device and/or a first server and/or at least one second server.

### BRIEF DESCRIPTION OF FIGURES IN THE DRAWING

The present invention will be described below on the basis of specific embodiments with reference to the accompanying drawing, in which:
Fig. 1 shows a schematic diagram of a system according to the present invention;
Fig. 2 shows another schematic diagram of a system according to the present invention;
Fig. 3 shows a schematic diagram of a module structure of a mobile client;
Fig 4 shows a further schematic diagram of the structure of a mobile client, wherein Fig. 4A shows the left part, Fig.4B shows the middle part, and Fig. 4C shows the right part of the diagram;
Fig. 5 shows a flow chart according to the present invention;
Fig. 6 shows a schematic functional diagram according to the present invention;
Fig. 7 shows a schematic diagram of a display of a portable communication device when an image comprising a text object is to be captured;
Fig. 8 shows a diagram exemplifying some of the functions performed according to the present invention;
Fig. 9 shows a schematic representation of a display of a portable communication device when a specific service is to be performed;
Fig. 10 shows a situation in which the present invention is used by a tourist;
Fig. 11 shows a situation in which the present invention is used for performing product search;
Fig. 12 shows an offline application (upper part) and an online application (lower part) of the present invention; and
Fig. 13 shows an archiving application of the present invention.

### MODES FOR CARRYING OUT THE PRESENT INVENTION

Reference will now be made in detail to embodiments of the present invention, examples of which are illustrated in the accompanying drawing.

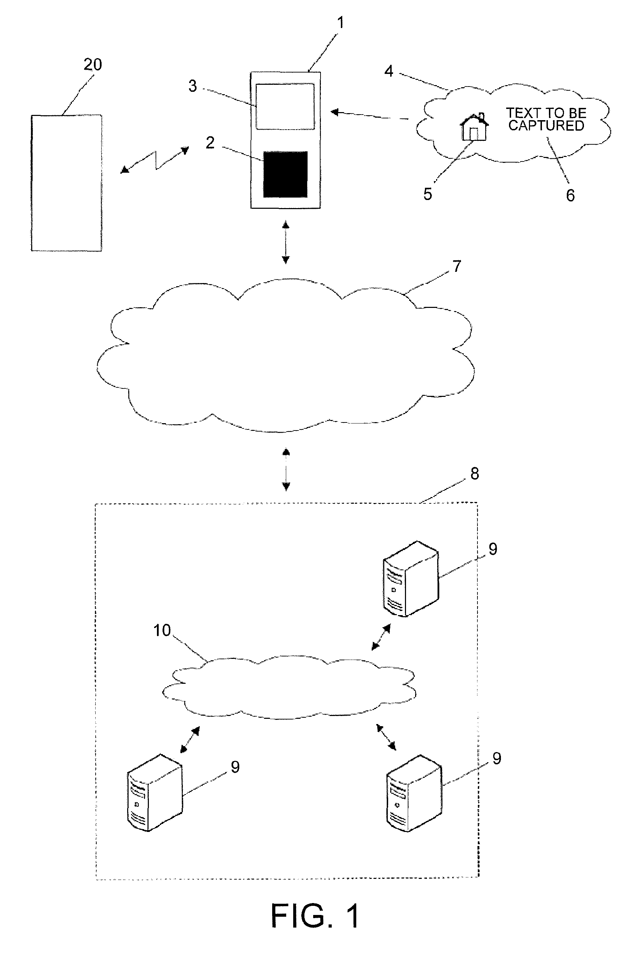

Fig. 1 shows schematic diagram of a system according to the present invention.

As shown in Fig. 1 the system comprises a portable communication device 1 such as a mobile client, mobile phone or similar input device that has a keypad 2, a display 3, a camera (not shown) and outputting means (also not shown), a first network 7, an external processing unit 8 having at least one server 9 (three are shown in Fig. 1 as an example) and a second network 10, and a separate control unit 20.

Furthermore, Fig. 1 shows a scene 4 comprising a plurality of objects, such as a house 5 and a text object "text to be captured" 6.

The portable communication device 1 can capture an image from the scene 4 using the camera.

It should be noted that the portable communication device 1 can be remote controlled by the separate control unit 20. This separate control unit can be for example a Bluetooth-control unit or the like enabling wireless remote control of the portable communication device 1.

Furthermore, the portable communication device 1 can communicate data with the external processing unit 8 via the first network 7 as shown by the arrows between the portable communication device 1 and the first network as well as between the first network 7 and the external processing unit 8.

As mentioned above, the external processing unit 8 comprises at least one server 9, such as the three servers 9 shown in Fig. 1 as an example. The servers 9 can communicate with each other via a second network 10 as shown by the arrows between the servers 9 and the second network 10.

The first network 7 and the second network 10 can be the same network or can be networks different from each other as may be required by a respective application. For example, the first network can be a mobile communication network such as a GSM network and the second network can be a circuit-switched network or a packet-switched network. However, these examples are not limiting for the present invention and the networks can be chosen as required by a respective application.

As used herein, the term "server" could also be equivalent to the term "service" so that in this case services would communicate with each other via the second network if such services would be provided on different servers 9, i.e. different computers or computer systems, or would directly communicate with each other if such services would be provided on the same server 9, i.e. the same computer or computer system. In this respect an appropriate transmission protocol, i.e. an appropriate data structure and/or transmission mechanism, can be used to enable exchange of data.

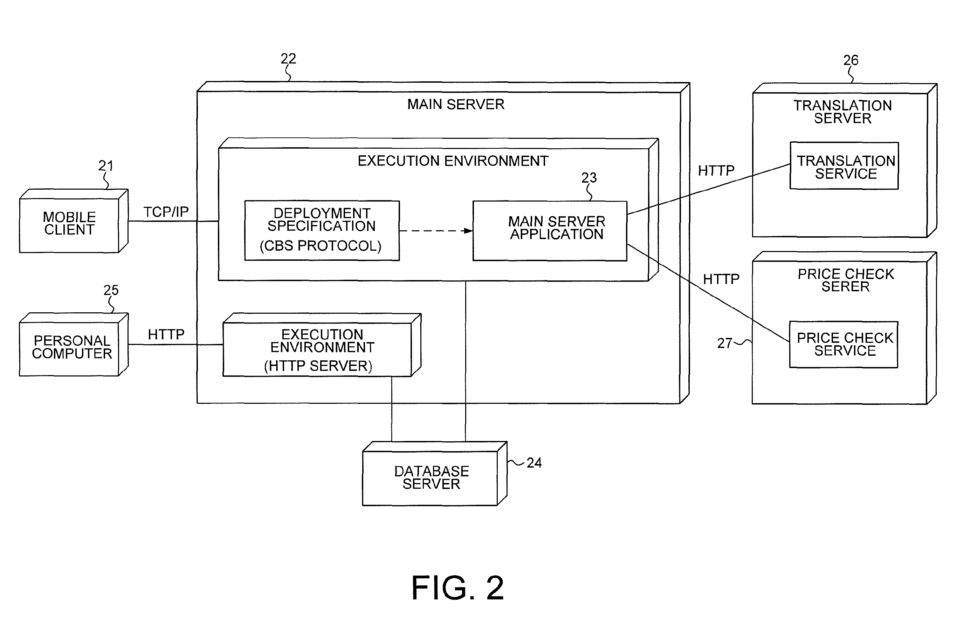

Fig. 2 shows another schematic diagram of a system according to the present invention. In Fig. 2, a mobile client 21 is communicable connected with an external main server 22 and communicates with the main server 22 using a communication network using TCP/IP (GPRS, UMTS, WLAN, for example). The main server 22 includes an application module 23 for performing processing on text data and/or image data received from the mobile client 21. The main server 22 processes the received data according to a specified protocol. The main server 22 is also connected with a database server 24 which may store the image data, text data and processed data for access by the mobile client 21, as well as for access by a personal computer PC 25 or similar device in real-time or later as needed, via the main server 22. The personal computer 25 communicates with the main server 22 via internet, using HTTP, for example.

Moreover, in Fig. 2, the main server 22 is connected with one or more sub servers such as a translation server 26 and a price check server 27 providing services based on the image data and/or text data and/or data processed (pre-processed) in the main server 22, for example.

According to the present invention the main server may also be responsible for storing accounting and billing information of at least one or each service provider who offers his service through this camera based service. Therefore the main server is capable to count service usage individually for each service provider so that the described service is able to offer and bill a usage based fee.

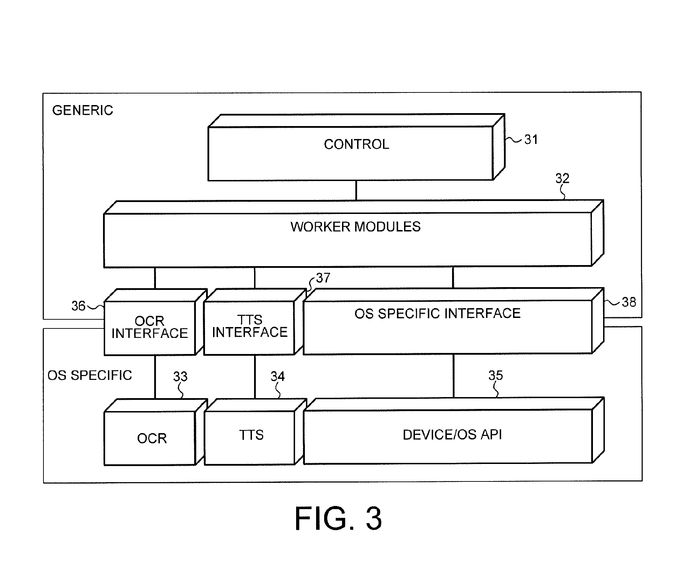

Fig. 3 shows a schematic diagram of a module structure of the mobile client. The module structure includes a platform-independent (which means the client can be adapted and ported very fast and easy to other mobile phone manufacturers) control module block 31 and a block 32 of worker modules as a generic part, and platform-dependent processing modules OCR (Optical Character Recognition) 33 and TTS (Text to Speech) 34, and an operating system specific API 35 as an operating system specific part, wherein the generic part and the operation system specific part are separated by corresponding interfaces 36, 37, and 38 for OCR, TTS and the operating system (OS), respectively.

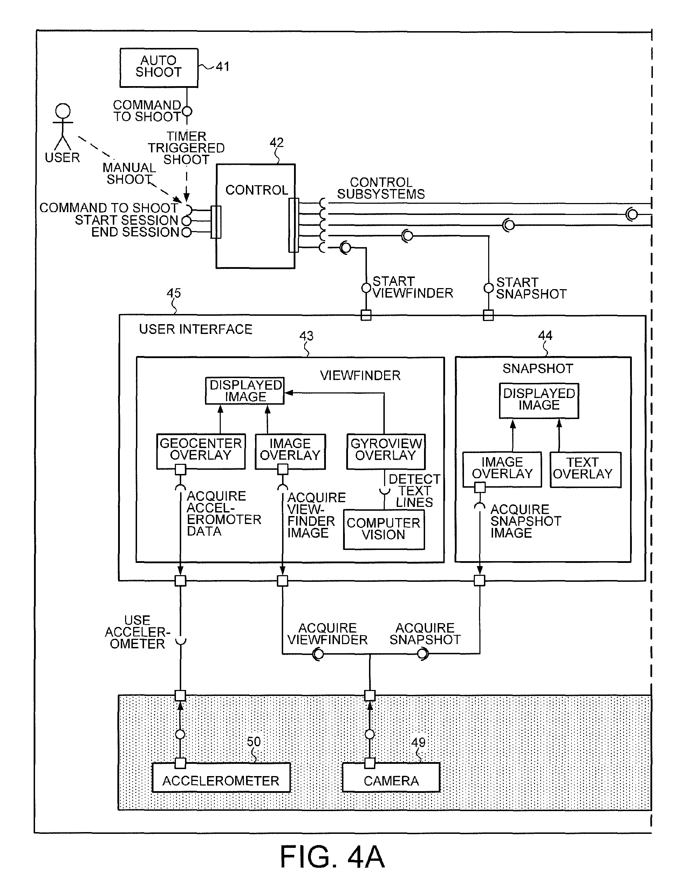

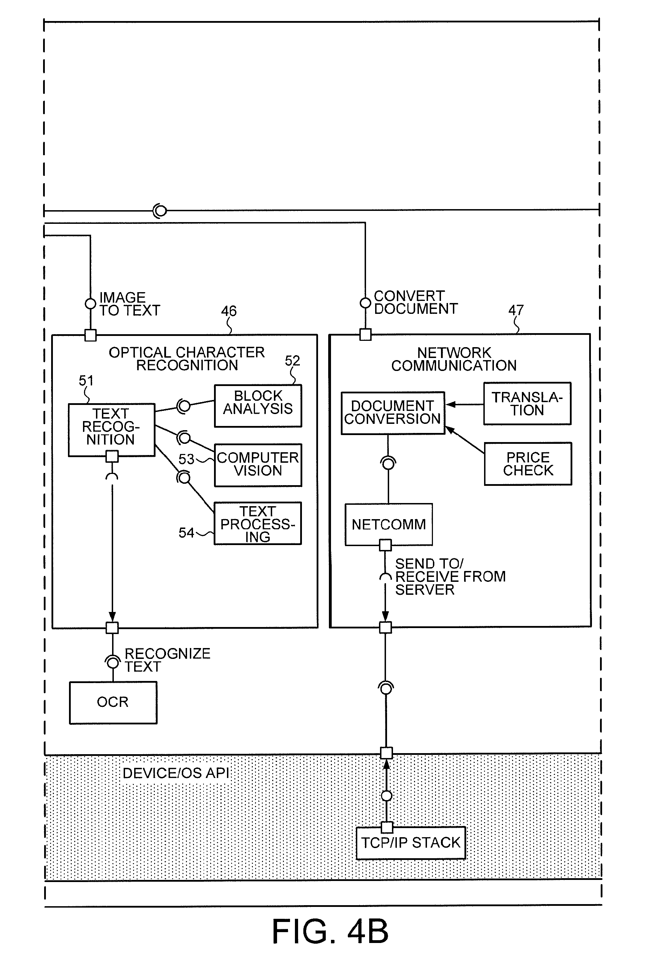

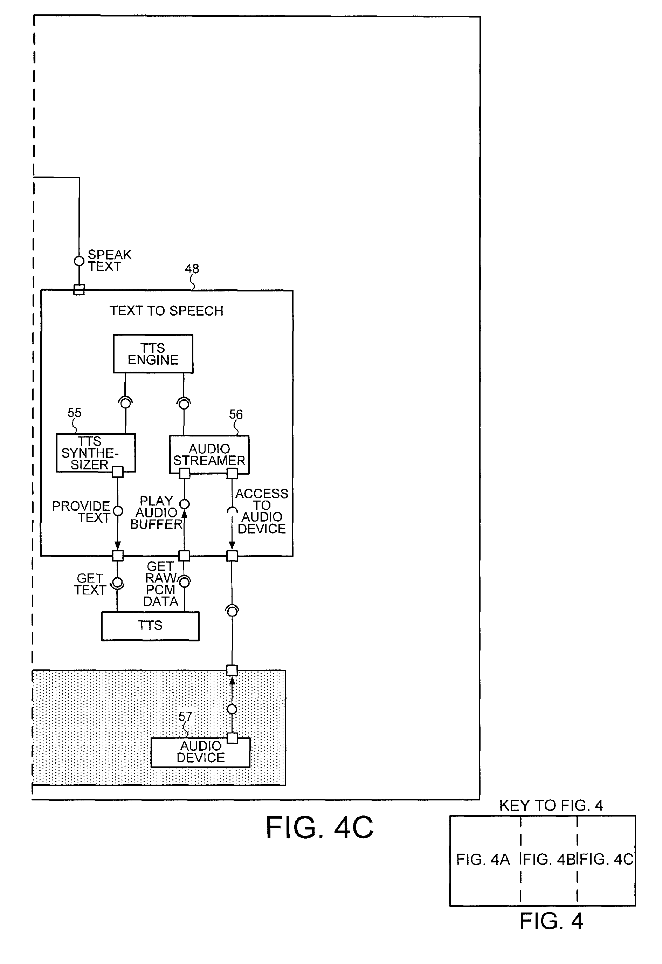

Fig. 4 consisting of Figs. 4A, 4B and 4C, which are to be arranged in this order from left to right, shows a further schematic diagram of the structure of the mobile client. The auto shoot module 41 issues a command to shoot an image after elapse of a predetermined time so that the user does not have to operate a button by which the position and orientation of the camera might unintentional be changed. However, also the user might give the shoot command instead. The time to be elapsed before issuance of a shoot command by the auto shoot module 41 is changeable by the user.

The control module 42 receives the commands input from the user and the auto shoot module 41 and further commands such as "start session" and "end session". The control module 42 accordingly controls a plurality of sub modules (worker modules or subsystems) such as a viewfinder module 43 and a snapshot module 44 which are connected with the control module 42 via a user interface 45, an image to text module 46, a convert document module 47 and a speak text module 48. It is to be noted that there may be further modules regarding further available services for processing and further processing of image data and text data, which later are partly described. The worker modules may be part of a client application that can be configured dynamically through the main server 22 without reinstalling the client application on the mobile client 21 such that each worker module can also run on the main server 22 in such a manner that load balancing can be realized.

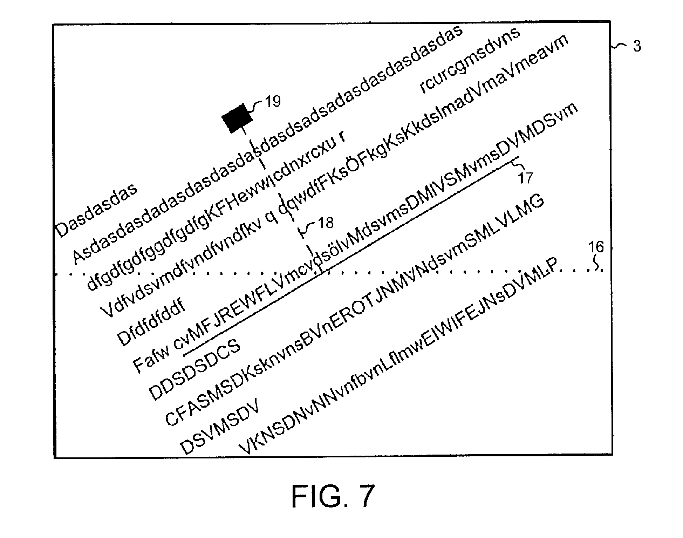

The viewfinder module 43 is responsible for showing a viewfinder when the user directs the mobile client including a camera 49 to an image for shooting until shooting of the image. The viewfinder may show the image with reduced resolution of 320 x 240 pixels, for example, as compared to the image displayed after shooting. Other reduced resolutions are also possible. For assisting pick up of an image, an image analysis may be performed, which detects the orientation of text in the image and displays it as corresponding lines on a display of the mobile client overlapping the viewfinder image (GyroviewOverlay) as will be further described later with reference to Fig. 7. In order to avoid distortions such as trapezoidal distortions of the taken image, information from an accelerometer 50 or G-sensor may be used to visualize the horizontal orientation of the mobile client (GeocenterOverlay). In the snapshot module 44, after shooting of image the image may be frozen. While the image is shown in the background, analyzed text may be overlaid on the image (TextOverlay).

The image to text module 46 shown in Fig. 4B performs optical character recognition (OCR) and includes a text recognition module 51, a block analysis module 52, a computer vision module, and a text post-processing module 54. Prior to character recognition some image processing might be performed (pre-processing) as well as a block analysis for finding image areas relevant for optical character recognition. Then, for recognition of characters a generally known OCR software might be used. After character recognition the recognised text may be post-processed based on the results of the pre-processing and the block analysis.

If a document conversion as an available service is not performed by the convert document module 47 itself, it performs network communication with an external server such as a main server according to the invention to request a corresponding service such as translation and price check (price search).

The speak text module 48 shown in Fig. 4C converts text to speech, wherein the TTS (text to speech) engine module communicates with a TTS synthesizer module 55, which generates audio data (PCM samples, for example) from the input text data, and an audio streamer module 56, which routes the audio data to the audio device 57 for sound output. The TTS synthesizer module 55 and the audio streamer module 56 may each use or access common TTS software.

Additionally, Fig. 4 shows the control and communication connections between the sub modules (worker modules) and the API (Application Programming Interface) of the hardware platform of the mobile client which includes the accelerometer 50, the camera 49, a TCP/IP stack, the audio device 57, and/or further components as needed.

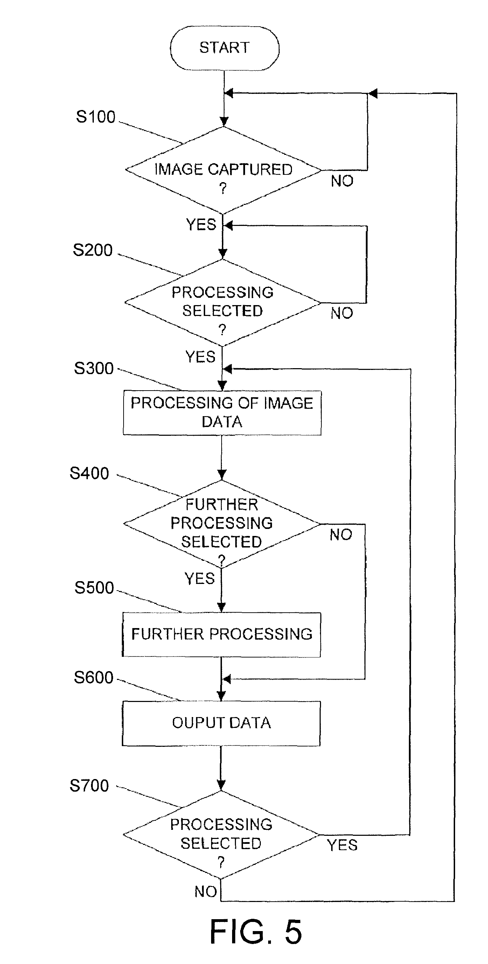

Fig. 5 shows a flow chart according to the present invention.

With reference to Fig. 5 the general functional principle of one embodiment of the present invention will be described.

In step S100 it is checked whether or not the portable communication device 1 has captured an image to be processed to obtain image data. The image to be processed comprises a text object such as the text object "text to be captured" 6 shown in Fig. 1 within the scene 4.

In step S200 it is checked, whether or not processing of the image data is selected. Selecting image data can be performed by the user of the portable communication device 1 for example by selecting a predetermined processing among a plurality of manners of processing shown in the display 3 of the portable communication device 1 as icon or text data using for example the keypad 2 of the portable communication device 1.

If the answer of step S200 is "NO" indicating that no processing is selected, the flow returns to step S100. If the answer of step S200 is "YES" indicating that a processing is selected, the flow proceeds to step S300 which performs the processing selected.

In step S400 it is checked whether or not further processing of data obtained by processing of step S300 is required. If the answer of step S400 is "YES" the flow proceeds to step S400 which performs the further processing required. In step S600 data obtained by the processing of step S300 and/or data obtained by the further processing of step S500 are output to the portable communication device 1. If the answer of step S400 is "NO" the flow directly proceeds to step S600 in which data obtained by the processing of step S300 are output to the portable communication device 1. In step S700 it is again checked whether or not processing of the image data is selected. If the answer in step S700 is "YES" the flow returns to step S300. If the answer in step S700 is "NO" the flow returns to step S100 and capturing of a new image is awaited.

In the general functional principle described above, the image data to be captured comprises a text object within the scene 4 shown in Fig. 1 such as the text object "text to be captured".

Such text object can be captured in step S100 using the camera of the portable communication device 1. The processing in step S300 is performed within the portable communication device 1 or within the external processing unit 8 after transmitting image data of the captured image to the external processing unit 8 via the first network 7 to recognize the text within the text object such as the text "text to be captured" of the text object "text to be captured" 6 to obtain text data.

The further processing in step S400 which is an optional feature can then be performed either in the portable communication device 1 or in the external processing unit 8 after transmitting the text data to the external processing unit 8 via the first network 7 if necessary. Details of such further processing will be described later.

The output of data in step S600 is performed in the portable communication device 1 such that data either directly relating to the text data or indirectly relating to the text data, i.e. relating to data obtained by processing and/or further processing of the text data, are outputted in a form noticeable or convertible to be noticeable by the user of the portable communication device 1 such as written text, speech or the like.

From the above it is clear that at least one of processing or further processing can be performed in the portable communication device 1 or the external processing unit 8 dependent of a respective application.

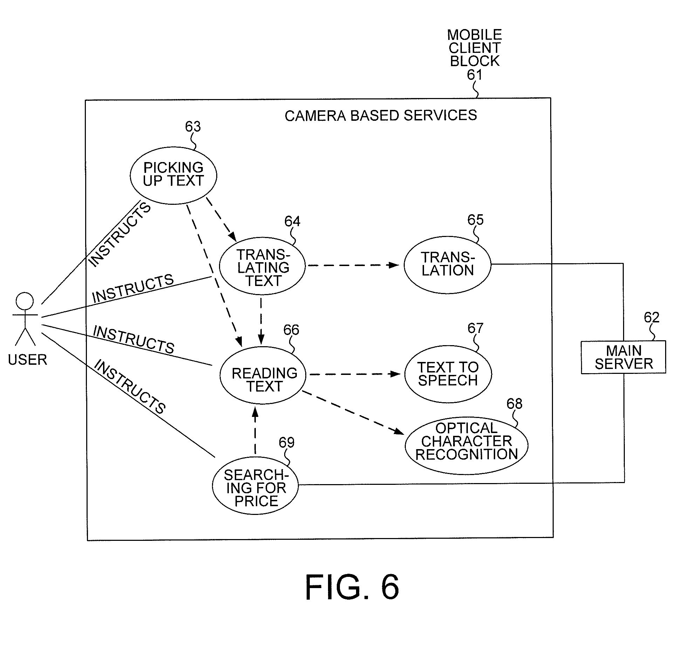

Fig. 6 shows a schematic functional diagram according to the present invention including a mobile client block 61 and a main server 62. At first, the user instructs the picking up text function 63 to pick up text by shooting an image including text. Then the user may instruct to translate text, read text or search for a price of a product represented by the text. When translation of text is instructed by the user by selecting the translating text function 64, the translation function 65 is invoked which in turn requests a translation service via a main server 62. Moreover, after translation of text the reading text function 66 is invoked, the reading text function 66 invokes the text to speech function 67 for converting the translated text data into speech data. The user may alternatively directly instruct the reading text function in case a translation is not necessary, wherein also in this case the text to speech function 67 is invoked.

Moreover, the reading text function 66 invokes the optical character recognition function 68 for obtaining text data from image data obtained from the picking up text function 63.

When the user instructs to search for a price, the searching for price function 69 invokes the reading text function 66 which in turn invokes the optical character recognition function 68 to obtain text data, and requests a corresponding service via the main server 62 such as searching for lowest price and nearest reseller (product search). After receiving price text information and/or product review information, for example, from the main server 62, this information may be read and/or shown to the user. The searching for lowest price and nearest reseller or sales person may be performed based on the current location of the user which is provided by the GPS signal or through GSM cell triangulation.

According to the product search result the user may also decide to buy the product if a service provider provides a 'buy feature'. The main server may record the transaction for billing the product search feature.

As can be seen from the above, according to the embodiment shown in Fig. 6, at first it is necessary to pick up text, i.e. an image including text, and to perform OCR. The final result is reading of text via a speech synthesizer (TTS). Depending on the service requested by the user, communication with the main server is performed. As above explained, the main server is adapted to store the processed data for later access by a personal computer, for example, via internet or other suitable communication means. The main server may store the data itself and/or in a separate database server as mentioned above. Of course, other functions corresponding to other services provided by the mobile client itself or by or via the main server may be correspondingly added according to the principle shown in Fig. 6.

As regards the specific manner of capturing the image data comprising the text object the following processing is performed.

First of all, the image can be captured using the portable communication device 1 which is held in the hand of the user of the portable communication device 1 in a manner of normal use.

Fig. 7 shows a schematic diagram of the display 3 of the portable communication device 1 when an image comprising a text object is to be captured.

As shown in Fig. 7, if user wishes to capture an image using the camera 15 of the portable communication device the user selects a capturing mode of the portable communication device 1 such that the display 3 of the portable communication device 1 shows the image within the capturing area of the camera 15 of the portable communication device 1. Furthermore, the display 3 shows a specific reticule displayed to the user of the portable communication device 1. This reticule enables the user of the portable communication device 1 to focus on a desired portion of the environment in the following manner.

As shown in Fig. 7, the reticule comprises a first line 16 shown as a horizontal dotted line (in an actual application of the present invention this line could be indicated on the display 3 of the portable communication device 1 in a specific color such as red) which helps the user of the portable communication device 1 to adjust the camera 15 of the portable communication device 1 to the text object or text objects to be captured which are contained in the environment. If the text object or the text objects are not adjusted in a suitable manner, the portable communication device 1 will rotate the image shown in the display 3 of the portable communication device 1 in a suitable manner such that later text recognition can be performed faster and more reliable.

Furthermore, the reticule comprises a second line 17 shown as an inclined continuous line which indicates how a text object or text objects would be rotated by the portable communication device 1. If this continuous line has a first specific color such as green this indicates that the text object or text objects are aligned in a suitable manner and the text object or text objects can immediately be used without any further processing. If this continuous line has a second specific color such as red this indicates that the text object or text objects should be rotated by the portable communication device 1.

Finally, the reticule comprises a third line 18 shown as an inclined dashed line which indicates distortion of the text object or text objects. The third line 18 comprises a projection point 19 at an end thereof which helps the user to capture the text object or text objects without distortion by assisting the user to hold the camera 15 as upright as possible with respect to the text object or text objects to be captured. If the projection point 19 is exactly in the center of the image shown in the display 3, the camera 15 is held exactly upright with respect to the text object or text objects to be captured.

Furthermore, in addition to or instead of the reticule displayed to the user, suitable alignment such as quality of an image to be captured can be indicated by at least one of a manner of actuation of a vibrator of the portable communication device 1, and an audio feedback provided by the portable communication device 1. For example, the faster the vibrator vibrates or the louder an audio feedback of the portable communication device 1 is the worse the quality of the image to be captured is.

Generally speaking, there can be provided actuating means, wherein in capturing the image the camera uses the actuating means to enable the user to focus on a desired portion of the environment. Furthermore, by using the actuating means there can be performed automatic release in capturing the image.

Such actuating means can also be or use a G-sensor or acceleration sensor to suitably align the image before performing automatic release in capturing the image.

The following manners of processing can be performed in addition to or instead of the above.

In a first manner, an overall image is acquired by the camera. Using a view finder an image to be captured is selected from the acquired overall image. Thereafter image enhancement is performed using for example an adaptive histogram alignment or the like. To correct any error of exposure and to enhance local contrast of the image to be captured histogram alignment or the like is performed. Thereafter, rotation analysis using for example binarization, differentiation and/or Local Hough analysis or the line is performed. To enhance performance the image is rescaled to a small size and binarized. Using edge analysis and following local Hough transformation it is recognized by which angle text in the image to be captured is rotated as compared to a horizontal line. This can be assisted by displaying an artificial horizon which helps the user of the portable communication device 1 in achieving appropriate alignment of the camera and enhances later processing speed.

Data of a G-sensor or acceleration sensor are read out and this data indicating relative position of the camera is used for outputting a specific view assisting the user in appropriate alignment of the camera and avoiding distortion if the image to be captured comprises an even text object for later text recognition.

In a second manner, an image to be captured is acquired by the camera. If the image to be captured is captured by actuating the camera an auto-focus function is applied to the image to be captured and the image to be captured is then actually captured. The captured image data is then stored for example in JPEG data structure. Thereafter image enhancement such as adaptive histogram alignment is performed as has been mentioned above with respect to the first manner.

Segmentation is performed on continuous blocks for example using region growing, convex Hulls or the like. To enhance speed of later text analysis and to speed up later read out, continuous blocks are segmented.

Then, rotation analysis is performed using for example binarization, differentiation, local Hough analysis or the like. Since text recognition is difficult using rotated texts, rotation angle of the captured image is verified and the captured image is inverse rotated.

It is evaluated whether or not a block contains text which can be analyzed. To save time in later text analysis, continuous blocks are checked for the probability of containing text.

The order of reading out text is determined from the left upper side to the right lower side. Adaptive binarization is performed to enable later text recognition even if poor lighting conditions are present such as hard shadow. In the later text recognition the thus obtained text blocks are used.

In addition to the above, there could be performed stitching of two or more images in such a manner that a first portion of the environment to be displayed is captured in a transparent or semi-transparent manner and thereafter a second portion of the environment to be displayed is captured in a transparent or semi-transparent manner such that the user is enabled to stitch the first and second image to obtain an overall image to be used for further processing.

Also, there could be performed unwarping of the text object or text objects to thereby improve the quality of an image by removing any warping effect therefrom.

If the text object or text objects is or are selected and adjusted using the processing mentioned above the text object or text objects is or are captured by actuating the capturing mode of the portable communication device 1 to obtain image data corresponding to the text object or text objects.

Furthermore, block recognition could be performed on captured image data before processing or further processing such as text recognition mentioned below is performed to enable parallel processing of obtained blocks, such as one block is processed and another block is prepared, and to enhance response time of overall processing.

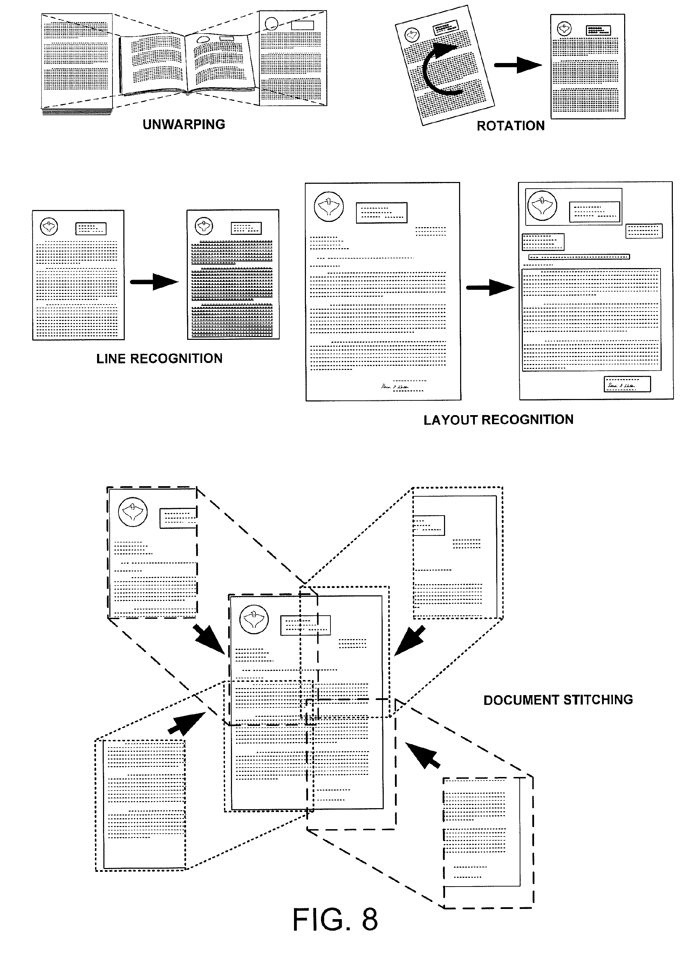

Fig. 8 shows a diagram exemplifying some of the above mentioned functions.

Then, there is performed processing as shown in steps S200 to S700 of Fig. 5.

In the following, specific services for processing and/or further processing are described. However, it should be noted that such specific services are not limiting for the present invention but rather are intended to more fully make clear the specific features shown in the figures by way of example.

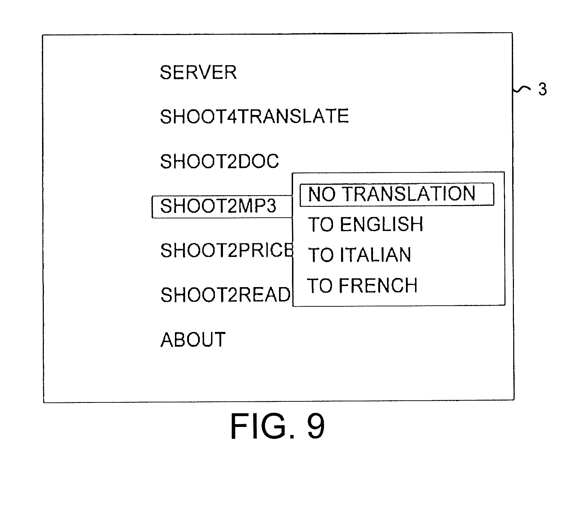

Fig. 9 shows a schematic representation of the display 3 of the portable communication device 1 when a specific service is to be performed.

As shown in Fig. 9, the display 3 of the portable communication device 1 shows different services when a user has selected to perform one of such services based on an image captured as mentioned above. In Fig. 5 five items "SHOOT4TRANSLATE", "SHOOT2DOC", "SHOOT2MP3", "SHOOT2PRICE" and "SHOOT2READ" are shown by way of example as services which can be selected by the user of the portable communication device 1. Furthermore, two further items "SERVER" and "ABOUT are shown in Fig. 5. The further item "SERVER" enables a user to input an address of a server such as a server 9 of the external processing unit 8 shown in Fig. 1. This address is stored and used for services to be selected later by the user of the portable communication device 1 if the need arises. The further item "ABOUT" enables the user to obtain further information about the program including all of the services which can be selected by the user of the portable communication device 1 or to obtain any information about the manner and amount of payment of respective services and/or any licensing information.

In Fig. 9 the service "SHOOT2MP3" is selected by the user as is obvious from the box around the service "SHOOT3MP3" and a subitem "NO TRANSLATION" is selected as is obvious from the box around the subitem "NO TRANSLATION".

It should be noted that respective services are shown in Fig. 9 as being displayed using text data displayed in the display 3 of the portable communication device, but there is also the possibility to use another way of displaying respective services such as using icons as long as the user of the portable communication device 1 is enabled to select one service from the plurality of services.

In the following the service "SHOOT4TRANSLATE" will be described by again referring to the figures as need arises.

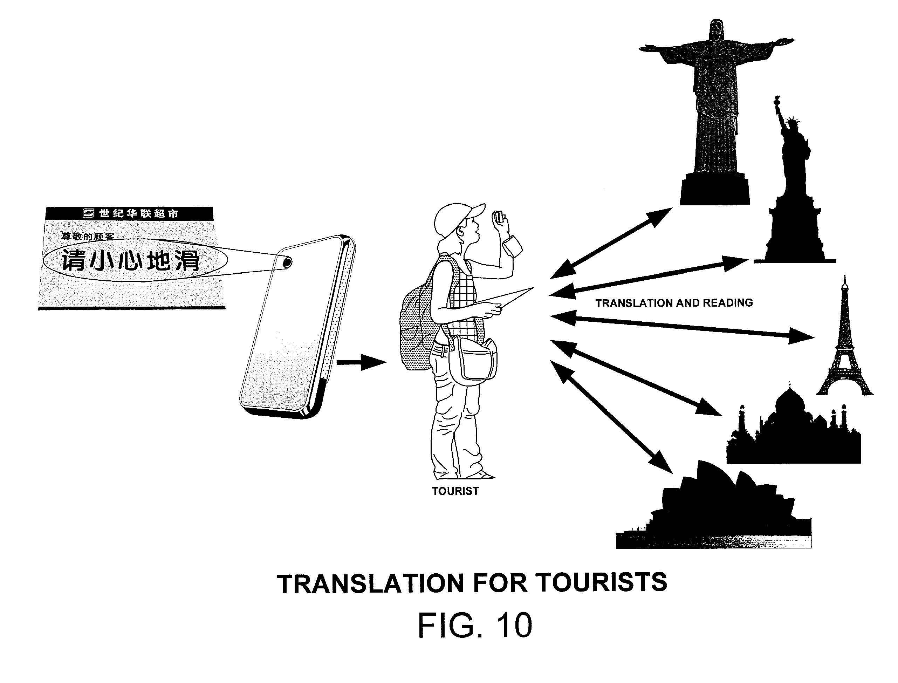

Fig. 10 shows a situation in which a tourist takes an image of a text of a foreign language with the camera integrated in his mobile phone and selects the service of translation of the text and of reading the translated text. When the translation service is requested via the main server (server 9), translation into a variety of other languages is possible without the necessity to provide memory and processing resources in the mobile phone itself. The transactions user specific account information (such as IMSI) for translation functionality is recorded by the main server for billing.

Image data captured as mentioned above are processed in the mobile communication device 1 to recognize and extract text data from the image data. Thereafter, the text data are transmitted to a server 9 of the external processing unit 8 such as the main server which is indicated by the address or name stored during selecting the item "SERVER" beforehand. Alternatively, the server 9 is a preset server so that the item "SERVER" might be omitted.

The text data can be transmitted to the server 9 via for example WLAN, UMTS or the like.

The server 9 such as the main server or another service providing server which receives the text data then further processes the text data by translating the text data from one language into another language selected beforehand by the user of the portable communication device 1. Thereafter, the data corresponding to the translated text data are transmitted from the server 9 to the mobile communication device 1 and are then either displayed on the display 3 of the portable communication device 1 or converted to speech and read out by an internal speech synthesizer of the portable communication device 1 and/or stored.

In the following the service "SHOOT2DOC" will be described by again referring to the figures as need arises.

Image data captured as mentioned above are transmitted to a server 9 of the external processing unit 8 which is indicated by the address stored during selecting the item "SERVER" beforehand. The server 9 processes the image data to recognize and extract text data from the image data.

The text data is analyzed by the server 9 and converted to a text file in a specific format such as DOC or PDF. The text file is transmitted from the server 9 to the mobile communication device 1 and is then displayed in the display 3 of the mobile communication device 1 and/or stored.

In the following the service "SHOOT2MP3" will be described by again referring to the figures as need arises.

Image data captured as mentioned above are transmitted to a server 9 of the external processing unit 8 which is indicated by the address stored during selecting the item "SERVER" beforehand. The server 9 processes the image data to recognize and extract text data from the image data. A speech synthesizer of the server 9 reads out the text data to obtain speech data in a specific format such as MP3. The speech data are transmitted from the server 9 to the mobile communication device 1 and are played on the mobile communication device 1 using an appropriate player such as the RealPlayer and/or stored. Optionally, the text data can be translated into another language by the server 9 before obtaining the speech data.

In the following the service "SHOOT2PRICE" will be described by again referring to the figures as need arises.

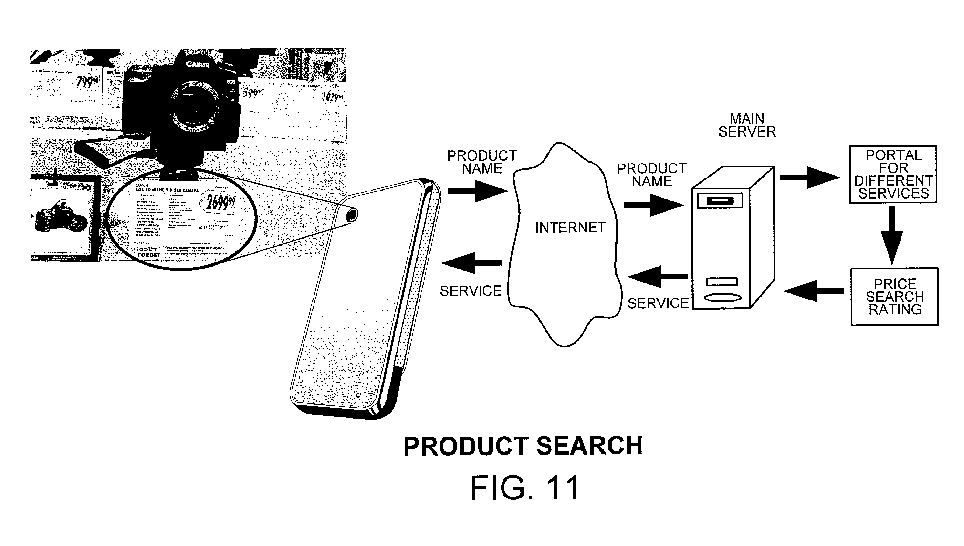

Fig. 11 shows a situation in which an image including product data and price information as text is taken with a camera integrated in a mobile phone and the service of price search (price check, product search) is requested via the main server. The main server communicates with a portal for different services, which in turn communicates with further servers or service providers performing price search, rating, searching for sales persons in the neighbourhood, etc.. The result of search is transmitted to the main server and from the main server to the mobile phone for display, for example. Thus, it is not necessary to perform barcode scanning or to input text via the keypad. Moreover, it is possible to integrate location based services such as searching for sales persons in the neighbourhood.

Generally, image data captured as mentioned above are processed in the mobile communication device 1 to recognize and extract text data from the image data. Thereafter, the text data are transmitted to a server 9 such as the main server or another service providing server of the external processing unit 8 which is indicated by the address or name stored during selecting the item "SERVER" beforehand. Alternatively, the server 9 is a preset server so that the item "SERVER" might be omitted.

As an example other than that shown in Fig. 11, it is assumed that a specific designation of a product such as "NOKIA N95 8GB" has been recognized and extracted from the image data. The server 9 such as the main server analyses online offers for this product for example in cooperation with another server 9 of the external processing unit 8 and then transmits data indicating the lowest price and the product name from the server 9 to the mobile communication device 1 where this information is displayed in the display of the mobile communication device 1 and/or stored. Alternatively, instead of using online offers there is also the possibility to use a position sensor such as a GPS sensor integrated with the mobile communication device 1 and to select an offer having a low price and being made by a seller near the position of the mobile communication device 1.

It should be noted that such position sensor can also be used in any other services as need arises.

In the following the service "SHOOT2READ" will be described by again referring to the figures as need arises.

Image data captured as mentioned above are processed in the mobile communication device 1 to recognize and extract text data from the image data. Thereafter, the text data is directly read out by an internal speech synthesizer of the mobile communication device 1. Thus, no interaction with the external processing unit 8 and/or any server 9 thereof is necessary.

Alternatively, the text could be displayed in the display 3 of the portable communication device 1 to thereby obtain a service "SHOOT2TEXT" (not shown in Fig. 9).

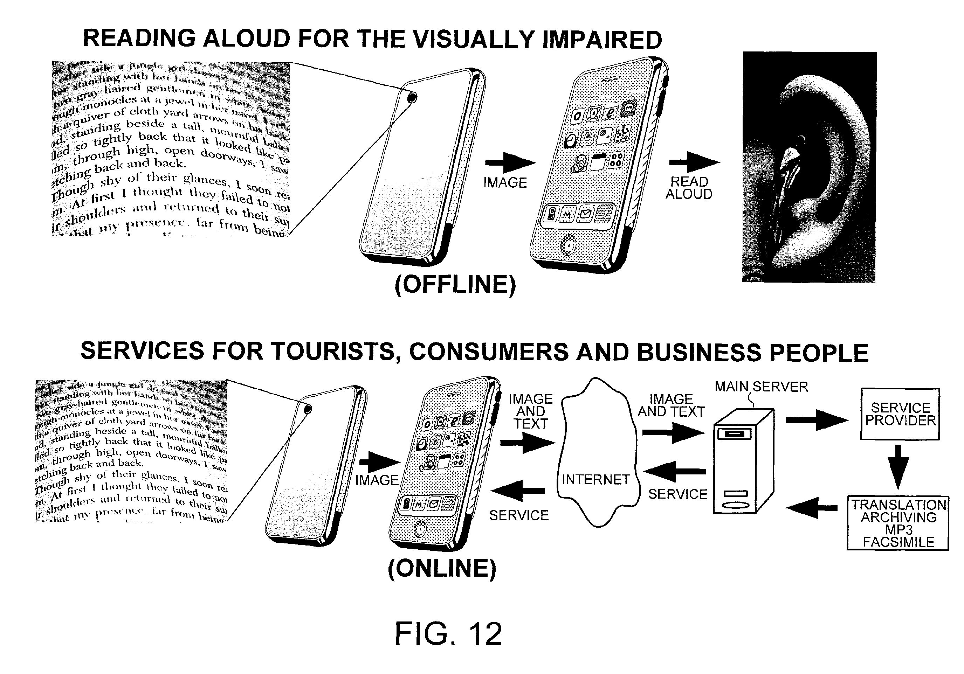

Fig. 12 shows in the upper part a situation in which text is taken with a camera of a mobile phone, wherein the text, after having undergone appropriate processing such as OCR and TTS, is read to a blind, visually impaired or dyslexic person, for example. In the lower part of Fig. 12 there is shown a situation in which text is taken with a camera of a mobile phone, the image and/or text data is transmitted to the main server, the main server requests a service provider to provide a service, which in turn requests, if it does not provide the service itself, another service provider to provide the service such as translation, archiving, convert to mp3 format, send a facsimile including the text data, etc. If necessary, corresponding text related data are transmitted to the main server and from the main server to the mobile phone according to the requested service.

According the archiving functionality the text information which may be stored on the main server may be classified by indexing keywords of the received text information, such that the information can be categorized by much common keywords.

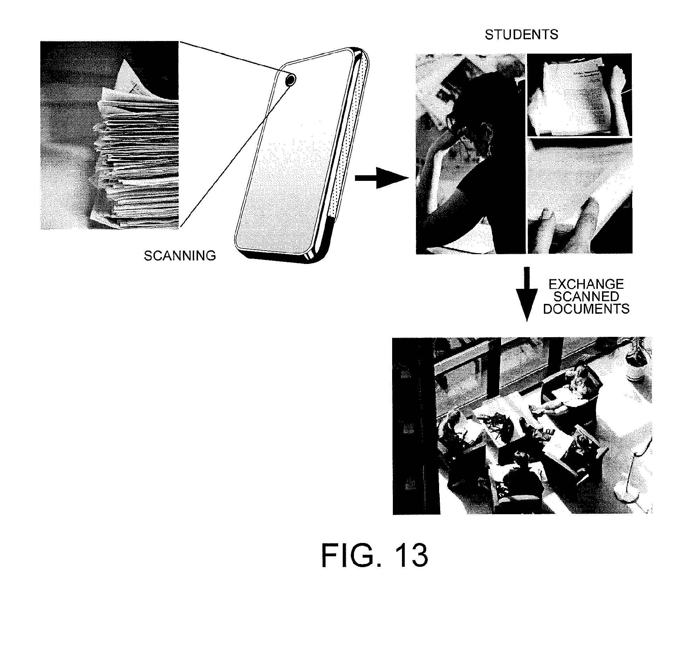

Fig. 13 shows a situation in which documents are scanned using a camera of a mobile phone, and archived or stored for exchange between students, for example. The archiving and exchange is performed via a server 9 such as the main server or another service provider or portal for different services.

Furthermore, in all services mentioned above and any other services which could be applied to the system mentioned above, there could be performed storing of at least one of the image data, the text data and the data related to the text data of at least one captured image on at least one of the servers 9 to enable the portable communication device 1 to access the at least one of the image data, the text data and the data related to the test data for at least one captured image in real-time. This enables archiving of data at a central site for example in a kind of at least one list.

In this respect, the at least one of the image data, the text data and the data related to the test data for the at least one captured image can be stored in connection with position data indicating a position where the at least one captured image is captured. This position information can be obtained by for example a GPS sensor or the like. If such data stored in connection with position data are displayed at a site where such data or the image data from which such data are derived have been obtained, so-called geo-tagging can be performed.

Having described specific examples of services to be selected by the user of the mobile communication device 1 it should be noted that any other services may be provided using the principles mentioned above, which services could or could not need any interaction between the portable communication device 1 and the external processing unit 8 and/or one or more servers 9 thereof and/or any interaction between servers 9 of the external processing unit. For example, the aforementioned services could be modified accordingly if the need arises.

Furthermore, image data captured at one time can be used for an arbitrary number of services instead of the need to newly capture image data before selecting a new service.

As is obvious from the above, the present invention enables a user to input data to the portable communication device in a simple manner without the need of using a keypad or the like and to use inputted data in a great number of services which are provided in connection with the portable communication device

The portable communication device 1 described above can be for example a mobile phone such as a smartphone or the like as already above explained, having a camera integrated therein as well as sufficient memory capacity to store and execute a program having functionalities as mentioned above.

It should be noted that as software which is able to perform the aforementioned functionalities there could be used software as described in the unpublished European patent application 07122042.0 assigned to the assignee of the present invention, wherein this software is ported to the applications as mentioned above. Thus, in this respect this unpublished European patent application is incorporated herein by reference.

Although the present invention has been described above as a method, a portable communication device, and a server, having specific functionalities which are especially performed by software, it should be noted that the specific functionalities regarding all aspects of the aforementioned method and portable communication device represent alone subject matters according to the present invention, for which applicant reserves the right to prosecute them separated from the hardware structure described above by for example filing one or more divisional applications, one or more continuation applications or one or more continuation-in part applications.

Furthermore, although the present invention has been described in connection with certain specific embodiments for instructional purposes, the present invention is not limited thereto. Accordingly, various modifications, adaptations and combinations of various features of the described embodiments can be practiced without departing from the scope of the present invention as set forth in the accompanying claims.

## Claims

1. Method for providing camera-based services using a portable communication device (1, 21) of a user, comprising the steps of:
capturing an image of an environment using a camera (15, 49) of the portable communication device (1, 21) of the user to obtain image data;
processing the image data such that text data is recognized and extracted from the image data; and
outputting data related to the text data in a form noticeable or convertible to be noticeable by the user of the portable communication device (1, 21).

2. Method according to claim 1, wherein the text data is further processed to obtain the data related to the text data.

3. Method according to claim 2, wherein at least one of the step of processing and the step of further processing is performed by an external processing unit (8).

4. Method according to claim 3, wherein the text data is transmitted from the portable communication device (1, 21) of the user to the external processing unit (8), further processed by the external processing unit (8) to form the data related to the text data and the data related to the text data is transmitted from the external processing unit (8) to the portable communication device (1, 21) of the user.

5. Method according to one of claims 1 to 4, wherein the external processing unit (8) comprises a first server (9, 22) communicating with the portable communication device (1, 21) via a first communication network (7).

6. Method according to claim 5, wherein the external processing unit (8) comprises at least one second server (9, 24, 26, 27) communicating with the first server (9, 22) via a second network (10).

7. Method according to claim 6, wherein the at least one second server (9, 24, 26, 27) provides a service for processing the image data and/ or further processing the text data.

8. Method according to claims 6 or 7, wherein the first server (9, 22) is adapted to store accounting and/or billing information regarding at least one service provided by at least one second server (9, 24, 26, 27).

9. Method according to one of claims 6 to 8, wherein the at least one second server (9, 24, 26, 27) includes a database server (24) for storing at least one of the image data, the text data and the data related to the text data for at least one captured image, and the first server (9, 22) is communicable connected with a personal computer (25) for accessing the at least one of the image data, the text data and the data related to the test data for at least one captured image, which are stored on the database server (24), via the first server (9, 22).

10. Method according to one of claims 1 to 9, wherein the text data and/or text related data is archived by classifying the text data and/or text related data by indexing keywords thereof.

11. Method according to one of claims 1 to 10, wherein at least one of the image data, the text data and the data related to the test data for at least one captured image are stored in connection with position data indicating a position where the at least one captured image is captured.

12. Portable communication device (1, 21), comprising:
a camera (15, 49) adapted to capture an image of an environment;
a display (3) adapted to display at least one of a plurality of services to be selectable by a user of the portable communication device (1, 21); and
outputting means adapted to output data related to text data in a form noticeable or convertible to be noticeable by the user of the portable communication device (1, 21), wherein
the portable communication device (1, 21) is adapted to perform a method according to one of claims 1 to 20 when the user selects the at least one of the plurality of services.

13. Portable communication device (1, 21) according to claim 12, further comprising
at least one worker module (32) comprising at least one of
a worker module (46) for processing the image data such that text data is recognized and extracted from the image data,
a worker module (43) for displaying the image to be captured on the display (3) and performing an image analysis for detecting the orientation and/or distortion of text included in the image,
a worker module (51) for performing text recognition, and
a worker module(48) for converting the text data into speech for speech output;
at least one service module (47); and
a control module (31, 42) for controlling the at least one worker module (32),
wherein the worker modules work independently from each other and each are adapted to communicate with an operation system of the portable communication device (1, 21) via specific interfaces.

14. Portable communication device (9, 21) according to claim 13, wherein the at least one service module is adapted to communicate with a server to request for performing a service selected by the user.

15. Server, comprising:
a first interface for receiving image data and/or text data from a portable communication device (1, 21) via a first communication network,
a second interface for transmitting the received image data and/or text data to another server in a data format readable by the other server, for processing and/or further processing by the other server,
said second interface being adapted to receive the processed and/or further processed data from the other server,
said first interface being adapted to transmit the processed and/or further processed data received from the other server in a data format readable by the portable communication device (1, 21) as data related to text data to the portable communication device (1, 21).
